# FASCICULE DE BREVET EUROPEEN

(11) **EP 1 557 584 B1**
(45) Date de publication et mention de la délivrance du brevet: **13.12.2006**
(21) Numéro de dépôt: 04293158.4
(22) Date de dépôt: 29.12.2004
(51) Int. Cl.: F16F 9/02

(54) **Ressort à gaz comprimé à extensions intermédiaire et maximale variables**
Komprimierte Gasfeder mit in einem maximalen und einen Zwischenbereich einstellbaren Hubweg
Pressurized gas spring with adjustable intermediate and maximum strokes

(30) Priorité: 21.01.2004 FR 0400533
(43) Date de publication de la demande: 27.07.2005
(73) Titulaire: TRELLEBORG AB, 231 22 Trelleborg (SE)
(72) Inventeur: Ecarnot, Eric, 25770 Serre-Les-Sapins (FR)
(74) Mandataire: Laget, Jean-Loup

(56) Documents cités:
- EP-A- 0 753 684
- FR-A- 2 766 887
- GB-A- 2 351 788
- US-A- 4 230 309
- US-A- 5 157 806
- US-A- 5 799 759

## Description

La présente invention concerne un ressort à gaz comprimé, en particulier destiné à être utilisé pour assister à l'ouverture et à la fermeture d'un ouvrant tel qu'un hayon de véhicule automobile ou d'un panneau mobile quelconque pivotant autour d'un axe horizontal.

Les ressorts à gaz de ce genre comprennent un cylindre creux contenant un gaz sous pression. Il est fermé à l'une de ses extrémités et présente à son extrémité opposée une ouverture centrale recevant une tige de piston s'étendant en dehors du cylindre en pouvant glisser entre une position rétractée et une position étendue. La longueur étendue d'un ressort à gaz correspond à la distance entre les axes de ses fixations, en général des fixations à rotule, dont l'une est reliée à l'extrémité fermée du cylindre et l'autre à l'extrémité libre de la tige de piston.

Ces ressorts permettent en outre l'ouverture et la fermeture d'un hayon ou d'un panneau à une vitesse régulée, tout en limitant l'angle d'ouverture en remplissant la fonction de butée de fin de course.

Cependant, la longueur étendue d'un ressort à gaz classique est invariable, ce qui traduit sur un véhicule une hauteur de préhension du hayon toujours identique, ce qui peut causer une gêne à des personnes de petite stature essayant d'attraper le hayon pour le rabaisser de nouveau.

Pour remédier à ce problème, le brevet GB 2351788 décrit un ressort à gaz permettant de réduire la longueur étendue dans une plage donnée en offrant une multitude de positions entre une longueur étendue maximale et une longueur étendue minimale. Pour y arriver, ce brevet propose selon une variante de rendre des moyens de butée portés par la tige de cylindre axialement déplaçables par rapport à des moyens de butée disposés à l'intérieur du cylindre. Le réglage de la longueur étendue est effectué en faisant tourner le cylindre par rapport à la tige de piston.

Cependant, une fois le réglage choisi, le hayon du véhicule arrivera en butée pour chaque manoeuvre d'ouverture à la même hauteur, ce qui peut causer une gêne avec deux utilisateurs habituels du véhicule et de stature opposée puisque la personne de grande taille ou de petite taille sera pénalisée en fonction de la position du réglage.

Le brevet EP 0 753 684 présente une autre approche pour résoudre ce problème et propose de prévoir un arrêt intermédiaire de la tige de piston, ce qui détermine sur le véhicule une première position d'arrêt, puis par une traction sur la tige de piston obtenue par une poussée sur le hayon est obtenue la longueur étendue maximale du ressort à gaz. L'arrêt intermédiaire est obtenu à l'aide d'un deuxième piston portant des moyens d'étanchéité qui viennent coopérer, lors du déplacement de la tige de piston, avec une section d'étanchéité à l'intérieur du cylindre.

Cependant, du fait que l'arrêt intermédiaire est systématiquement mis en fonction lors de chaque manoeuvre, tout utilisateur habituel de grande taille sera pénalisée par cet arrêt inévitable. Cet arrêt intermédiaire est par ailleurs invariable, ce qui fait qu'il ne peut pas être adapté à un utilisateur d'une taille entre les deux extrêmes.

A partir de cet état de la technique, le but de l'invention est de remédier à l'ensemble des inconvénients mentionnés en proposant un ressort à gaz permettant de désactiver l'arrêt intermédiaire lorsqu'il n'est pas souhaitable et plutôt gênant, et de l'activer de nouveau à tout moment si besoin en est. Le ressort à gaz selon l'invention permet en plus de modifier la position de l'arrêt intermédiaire pour mieux l'adapter à la taille d'un utilisateur habituel autre qu'un utilisateur de grande taille.

L'objet de l'invention est un ressort à gaz comprimé, comprenant un cylindre contenant un gaz sous pression, ledit cylindre étant fermé à l'une de ses extrémités et présentant à son extrémité opposée une ouverture centrale recevant une tige de piston s'étendant en dehors dudit cylindre en pouvant coulisser entre une position rétractée et une position étendue, ladite tige de piston portant un premier piston et un deuxième piston espacé dudit premier piston par un élément tubulaire, lesdits premier et deuxième pistons définissant à l'intérieur du cylindre une première chambre, une deuxième chambre et une troisième chambre à volume variable en fonction de la position de ladite tige de piston, une entretoise tubulaire solidaire dudit cylindre s'étendant autour de ladite tige de piston de manière à former une butée d'extrémité audit premier piston en définissant la longueur maximale d'extension de ladite tige de piston, ledit premier piston portant des premiers moyens d'étanchéité entre lesdites première et deuxième chambres actionnés lors du déplacement de ladite tige de piston de ladite position rétractée vers ladite position étendue, ledit deuxième piston portant des deuxièmes moyens d'étanchéité entre lesdites deuxième et troisième chambres aptes à coopérer avec une section d'étanchéité sur la paroi intérieure de ladite entretoise de manière à définir une position d'arrêt intermédiaire lorsque ladite tige de piston est déplacée de ladite position rétractée vers ladite position étendue.

Le ressort à gaz selon l'invention est caractérisé par le fait qu'une dérivation est prévue entre la tige de piston, le deuxième piston et l'élément tubulaire afin de relier ladite troisième chambre à ladite deuxième chambre pour désactiver ladite position d'arrêt intermédiaire, ladite dérivation pouvant être obturée par des troisièmes moyens d'étanchéité pour activer ladite position d'arrêt intermédiaire.

Selon d'autres caractéristiques de l'invention :
- ladite dérivation comporte au moins une rainure sur la face intérieure dudit deuxième piston débouchant dans ladite troisième chambre en créant une zone non étanchable mettant celle-ci en communication avec un passage s'étendant entre ledit élément tubulaire et la tige de piston, et un canal transversal traversant ledit élément tubulaire pour mettre ledit passage en communication avec ladite deuxième chambre ;
- lesdits troisièmes moyens d'étanchéité sont logés dans une gorge circulaire effectuée sur la tige de piston, ledit deuxième piston et ladite tige de piston étant déplaçables axialement l'un par rapport à l'autre afin de placer lesdits troisièmes moyens d'étanchéité en regard de ladite rainure pour ouvrir la dérivation ou en retrait par rapport à ladite rainure pour fermer la dérivation ;
- ledit passage est essentiellement formé par un filet sur l'extrémité de la tige de piston coopérant avec un taraudage dudit premier piston et/ou dudit élément tubulaire ;
- ledit premier piston comporte un premier moyen d'accouplement pouvant venir en prise avec un deuxième moyen d'accouplement sur l'extrémité de l'entretoise formant butée lorsque ladite tige de piston est dans sa position d'extension maximale ;
- ledit taraudage peut venir en butée contre un épaulement sur la tige de piston définissant la pénétration maximale de ladite tige de piston dans ladite première chambre afin de délimiter la réduction maximale de la valeur de ladite position étendue ;
- la paroi intérieure de ladite entretoise comporte plusieurs sections d'étanchéité permettant auxdits deuxièmes moyens d'étanchéité de définir plusieurs positions d'arrêt intermédiaire ;
- ladite dérivation comporte un évidement longitudinal sur la face intérieure dudit élément tubulaire en communication avec ledit canal transversal de manière à créer une deuxième zone non étanchable ;
- ledit deuxième piston et ledit élément tubulaire forme un ensemble indépendant dudit premier piston, ledit ensemble étant pourvu d'organes élastiques aptes à s'accrocher dans des rainures longitudinales d'une section intérieure rainurée de ladite entretoise pour rendre ledit deuxième piston solidaire en rotation avec celle-ci de manière à le déplacer axialement sur la tige de piston à l'aide d'une liaison par filetage entre ledit élément tubulaire et ladite tige de piston sous l'effet d'une rotation relative de ces deux éléments ;
- lesdits éléments élastiques sont constitués par des pattes s'étendant dans le prolongement dudit deuxième piston et pourvues d'ergots dirigés radialement vers l'extérieur ;
- ledit premier piston est immobilisé sur la tige de piston et seul le deuxième piston est axialement déplaçable sur celle-ci ;
- ledit premier piston est prolongé par un manchon recevant ledit élément tubulaire et coopérant avec celui-ci par une liaison par filetage permettant le déplacement axial dudit deuxième piston par une rotation dudit premier piston ;
- un ressort coopère avec la tige de piston, l'une de ses extrémités prenant appui contre une collerette sur la tige de piston et l'autre extrémité contre une bague montée coulissante sur ladite tige de piston de manière à constituer une paroi mobile maintenue en position pour la réalisation dudit arrêt intermédiaire lorsque les deuxièmes moyens d'étanchéité viennent en contact avec ladite section d'étanchéité sur la face intérieure de l'entretoise.

D'autres caractéristiques et avantages de l'invention ressortiront de la description qui va suivre de plusieurs modes de réalisation non limitatifs de l'invention, en référence aux figures annexées dans lesquelles :
- la figure 1 est une vue en coupe longitudinale montrant un premier mode de réalisation d'un ressort à gaz selon l'invention ;
- la figure 2 est une vue à plus grande échelle de la partie centrale de la figure 1 ;
- les figures 3 et 4 montrent en une vue latérale respectivement en perspective un premier et un deuxième pistons reliés l'un à l'autre par un élément tubulaire ;
- les figures 5 à 7 montrent en une vue latérale respectivement en perspective de dessus et de dessous une entretoise constituant une butée au premier piston ;
- la figure 8 est une vue partielle en coupe montrant la tige de piston en déplacement vers sa position rétractée ;
- la figure 9 est une vue partielle en coupe montrant la tige de piston au début de son déplacement vers sa position étendue ;
- la figure 10 est une vue partielle en coupe montrant la tige de piston en déplacement vers sa position étendue lorsque le deuxième piston vient en contact avec la section d'étanchéité ;
- la figure 11 est une vue partielle en coupe montrant la tige en position étendue et le premier piston en butée contre l'entretoise ;
- la figure 12 est une vue partielle en coupe montrant la tige de piston en déplacement vers sa position étendue et le deuxième piston en contact avec la section d'étanchéité sur l'entretoise ;
- la figure 13 est une vue partielle en coupe montrant la tige de piston en déplacement vers sa position étendue et le deuxième piston ayant quitté la section d'étanchéité sur l'entretoise ;
- la figure 14 est une vue partielle en coupe montrant le premier piston en butée contre l'entretoise et la tige de piston rentrée dans le cylindre pour réduire à un minimum la longueur étendue du ressort tout en activant l'arrêt intermédiaire ;
- la figure 15 est une vue partielle en coupe montrant le premier piston en butée contre l'entretoise et la tige de piston rentrée dans le cylindre pour augmenter à un maximum la longueur étendue du ressort tout en inhibant l'arrêt intermédiaire, l'entretoise étant pourvue de deux sections d'étanchéité définissant deux arrêts intermédiaires ;
- la figure 16 est une vue partielle en coupe montrant le premier piston en butée contre l'entretoise et la tige de piston rentrée dans le cylindre pour augmenter à un maximum la longueur étendue du ressort tout en désactivant l'arrêt intermédiaire, l'élément tubulaire étant pourvu de deux zones non étanchables désactivant l'arrêt intermédiaire ;
- la figure 17 est une vue partielle en coupe montrant un deuxième mode de réalisation du ressort à gaz selon l'invention dans lequel le premier piston est indépendant du deuxième piston et de l'élément tubulaire qui forment un ensemble séparé ;
- la figure 18 est une vue éclatée en perspective montrant le premier piston, l'entretoise et l'ensemble élément tubulaire/deuxième piston de la figure 17 ;
- la figure 19 est une vue en coupe longitudinale de l'entretoise du mode de réalisation de la figure 17 ;
- la figure 20 est une vue en perspective de l'ensemble élément tubulaire/deuxième piston de la figure 17 ;
- la figure 21 est une vue en coupe longitudinale de l'ensemble élément tubulaire/deuxième piston de la figure 17 ;
- la figure 22 montre une variante du deuxième mode de réalisation dans laquelle le premier piston est immobilisé en translation sur la tige de piston ;
- la figure 23 montre une autre variante du deuxième mode de réalisation dans laquelle le premier piston est immobilisé en translation sur la tige de piston et prolongé par un manchon recevant l'élément tubulaire et coopérant avec celui-ci par une liaison par filetage ; et
- la figure 24 montre une variante du premier mode de réalisation dans laquelle un ressort est enfilé sur l'élément tubulaire en prenant appui d'un côté sur une collerette périphérique de celui-ci et de l'autre côté sur une bague coulissante portée par ledit deuxième piston.

Dans les figures, les éléments identiques ou équivalents porteront les mêmes signes de référence.

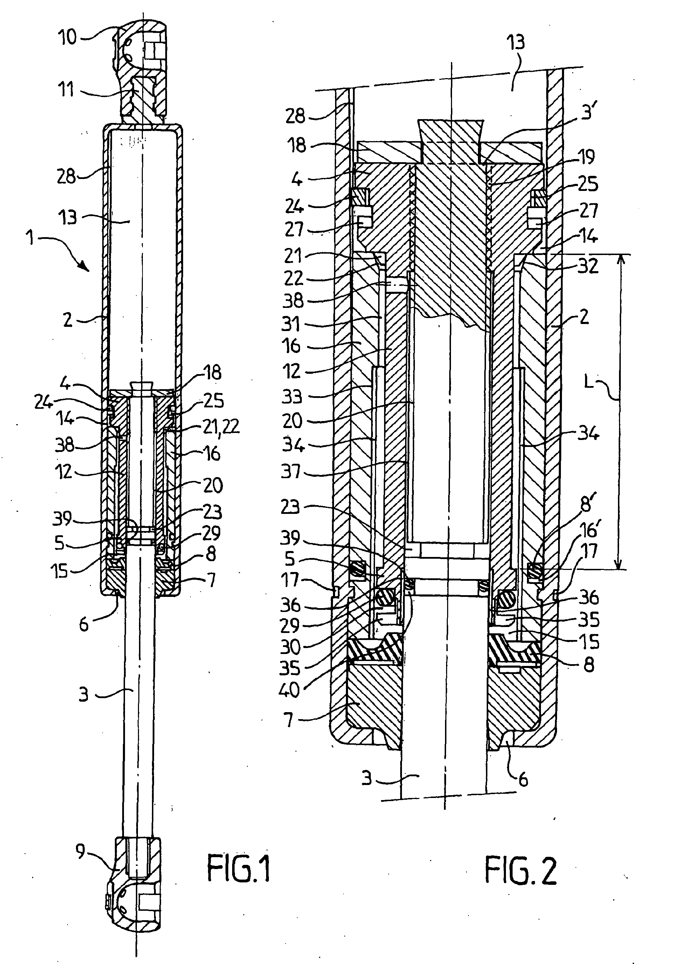

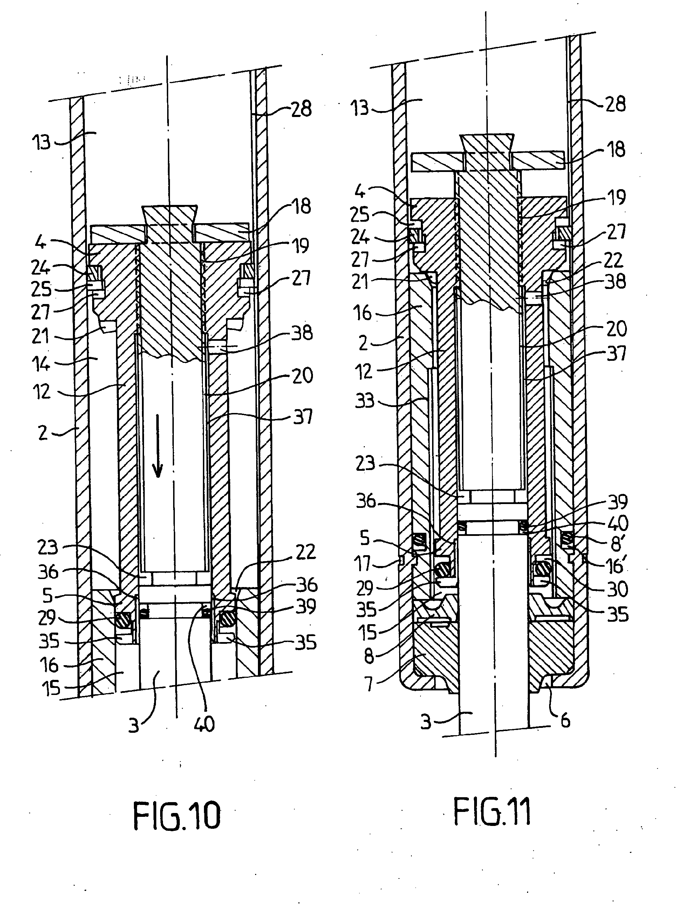

Les figures 1 à 16 montrent un premier mode de réalisation de l'invention avec ses variantes.

La figure 1 est une vue d'ensemble d'un ressort à gaz et la figure 2 montre à plus grande échelle les éléments essentiels de ce ressort.

Le ressort à gaz selon l'invention comporte, comme cela est connu du brevet EP 0 753 684, un cylindre creux 2 contenant un gaz sous pression, une tige de piston 3 portant un premier piston 4 et un deuxième piston 5. Le cylindre 2 est fermé à l'une de ses extrémités et comporte à son extrémité opposée une ouverture 6 recevant la tige de piston 3 qui à cette extrémité passe par un organe de guidage 7 et un joint d'étanchéité 8. La tige de piston peut ainsi coulisser entre une position rétractée et une position étendue, cette dernière étant illustrée aux figures 1 et 2.

Le gaz sous pression dans le cylindre 2 tend à pousser le premier piston vers l'extérieur et avec celui-ci la tige de piston 3 vers la position étendue de celle-ci.

Le ressort à gaz 1 est à ses deux extrémités pourvu de moyens de liaison permettant de relier le ressort à gaz, dans son utilisation spécifique pour un hayon d'automobile (non représenté), d'une part au hayon et d'autre part à la carrosserie de l'automobile.

Ces moyens de liaison comportent un premier organe d'articulation 9 reliant l'extrémité libre de la tige de piston 3 à la carrosserie, et un deuxième organe d'articulation 10 reliant l'extrémité opposée du cylindre 2 au hayon.

Le deuxième organe d'articulation est fixé au cylindre 2 par l'intermédiaire d'un embout formant tourillon 11 permettant une rotation du cylindre par rapport au deuxième organe d'articulation 10, alors que la tige de piston 3 est maintenue bloquée en rotation par le premier organe d'articulation 9.

Le premier piston 4 est espacé du deuxième piston 5 par un élément tubulaire 12. Dans ce premier mode de réalisation, le premier piston 4, l'élément tubulaire 12 et le deuxième piston 5 sont en une seule pièce. Les premier et deuxième pistons 4, 5 définissent à l'intérieur du cylindre une première chambre 13, une deuxième chambre 14, et une troisième chambre 15, toutes à volume variable en fonction de la position de la tige de piston 3.

Une entretoise 16 est disposée dans le cylindre 2 et s'étend autour de la tige de piston 3 pour servir de butée d'extrémité au premier piston 4 pour ainsi définir la longueur maximale d'extension de la tige de piston 3 et par conséquent l'angle d'ouverture du hayon. L'entretoise 16 est rendue solidaire du cylindre à l'aide d'un sertissage 17 effectué sur la périphérie du cylindre. Un joint d'étanchéité 8' est disposé entre le cylindre 2 et l'entretoise 16, dans une gorge circulaire 16' prévue sur la face extérieure de l'entretoise.

Une rondelle 18 est fixée à l'extrémité intérieure de la tige de piston 3, par sertissage contre en épaulement circulaire 3' de celle-ci, de manière à constituer une butée axiale au premier piston 4 qui comporte un taraudage 19 coopérant avec un filetage 20 sur l'extrémité de la tige de piston 3.

Pour le réglage de la longueur étendue du ressort à gaz, le premier piston 4 doit être axialement déplacé sur la tige de piston 3 pour faire varier l'extension maximale de celle-ci, et il comporte dans ce but sur sa face tournée vers l'entretoise 16 un premier moyen d'accouplement 21 coopérant avec un deuxième moyen d'accouplement 22 prévu sur la face d'extrémité de l'entretoise 16.

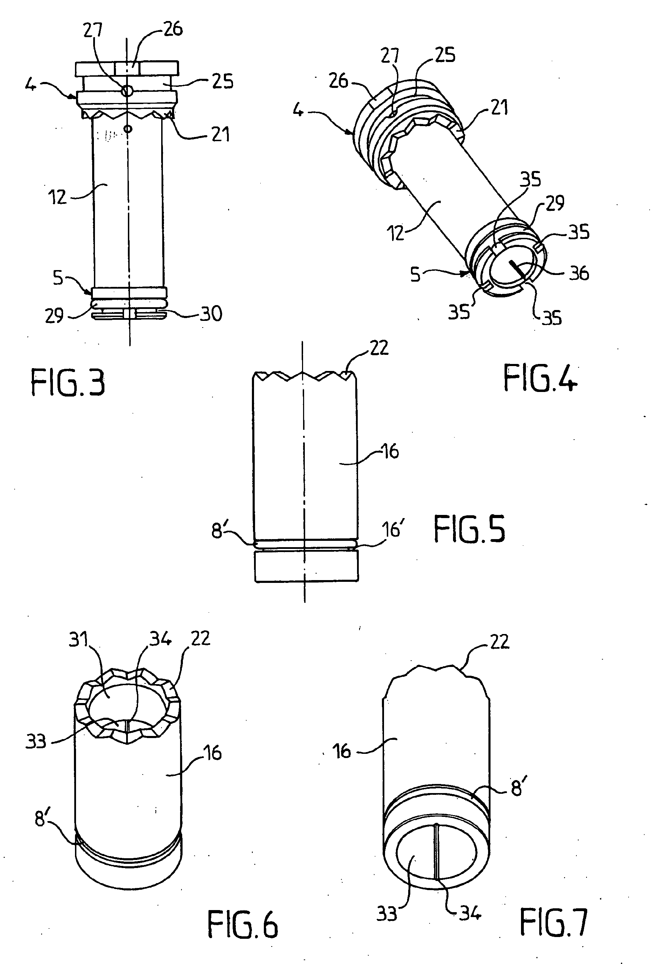

Ces premier et deuxième moyens d'accouplement 21, 22 sont avantageusement sous forme de dentures amenées en prise l'une avec l'autre lorsque le premier piston 4 vient en butée contre l'entretoise 16 pour définir l'extension maximale de la tige de piston 3. Dans les figures 3 à 7, les moyens d'accouplement 21, 22 sont clairement montrés sur les éléments correspondants.

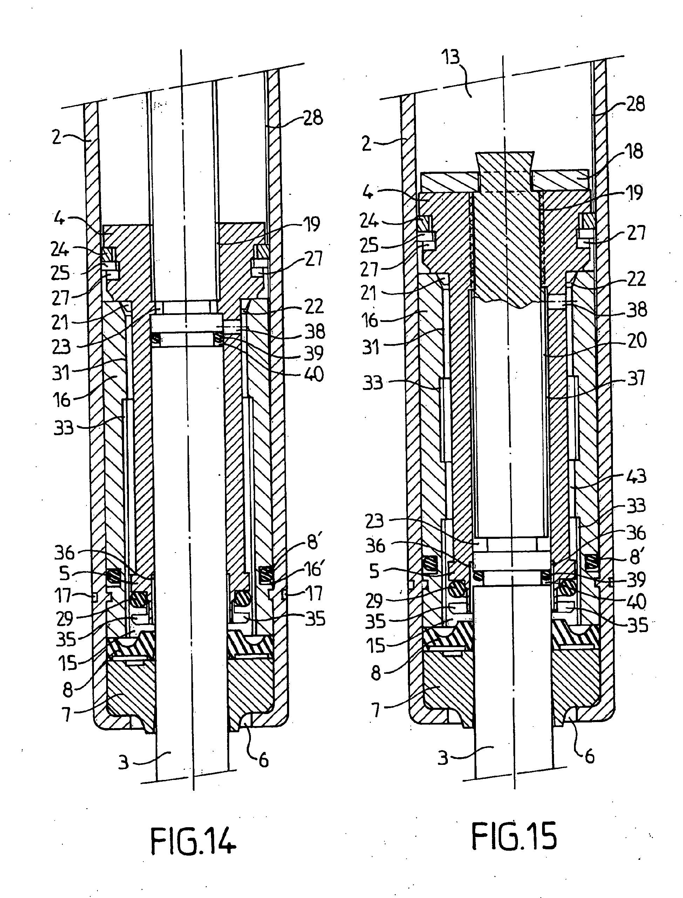

La tige de piston comporte une gorge circulaire 23 dont la paroi inférieure formant épaulement constitue une butée au taraudage 19 du premier piston 4 (voir figure 14).

Grâce à la présence de cette liaison par filetage 19, 20, il est ainsi possible d'effectuer ce réglage lorsque le moyen d'accouplement 22 est en prise avec le moyen d'accouplement 21 sur le premier piston en déplaçant le premier piston 4 sur l'extrémité filetée de la tige de piston par la rotation du cylindre 2 qui fait tourner l'entretoise 16 solidaire de celui-ci. Par ailleurs, si l'on continue à tourner le cylindre lorsque après avoir atteint l'extension maximale illustrée sur les figures 1 et 2, les moyens d'accouplement 21, 22 vont tout simplement glisser les uns sur les autres en générant des sauts successifs accompagnés d'un bruit caractéristique, ce qui fait que le taraudage 19 du premier piston ne risque pas d'être détérioré par l'effort appliqué.

Le premier piston 3 porte des premiers moyens d'étanchéité sous forme d'une bague d'étanchéité 24 disposée dans une gorge circulaire 25 prévue sur la périphérie du premier piston. La hauteur de la gorge 25 est supérieure à celle de la bague 24 afin de laisser un jeu pour le déplacement de la bague dans le sens axial. Le diamètre intérieur de la bague 24 est inférieure au diamètre de la gorge 25 afin de créer un interstice permettant au gaz sous pression d'y passer lorsque la bague se trouve déplacée contre la paroi inférieure de la gorge lors du déplacement de la tige de piston 3 vers l'intérieur du cylindre.

Pour la circulation du gaz entre les première et deuxième chambres 13, 14 lors du déplacement de la tige de piston vers sa position rétractée, le premier piston 4 comporte en outre sur sa périphérie supérieure un méplat 26 formant un passage de circulation de gaz entre la première chambre 13 et la gorge 25, alors que la paroi inférieure de la gorge comporte des échancrures 27 mettant la gorge en communication avec la deuxième chambre 14.

La bague qui est en contact avec et guidée par la paroi intérieure du cylindre 2 est ainsi déplacée contre la paroi supérieure de la gorge lorsque la tige de piston 3 est déplacée vers sa position étendue. La bague 24 établit alors une étanchéité entre la première chambre et la gorge 25.

Afin de laisser un passage au gaz de la deuxième chambre 14 vers la première chambre 13 lors du déplacement de la tige de piston vers sa position étendue, une rainure longitudinale 28 est prévue sur la paroi intérieure du cylindre 2, sur pratiquement toute la hauteur au-dessus de l'entretoise 16. Cette rainure 28 est rétrécie vers le bas de manière à réduire ce passage pour le gaz lorsque le premier piston s'approche de l'entretoise de manière à réduire la vitesse de déplacement de la tige de piston en fin de course.

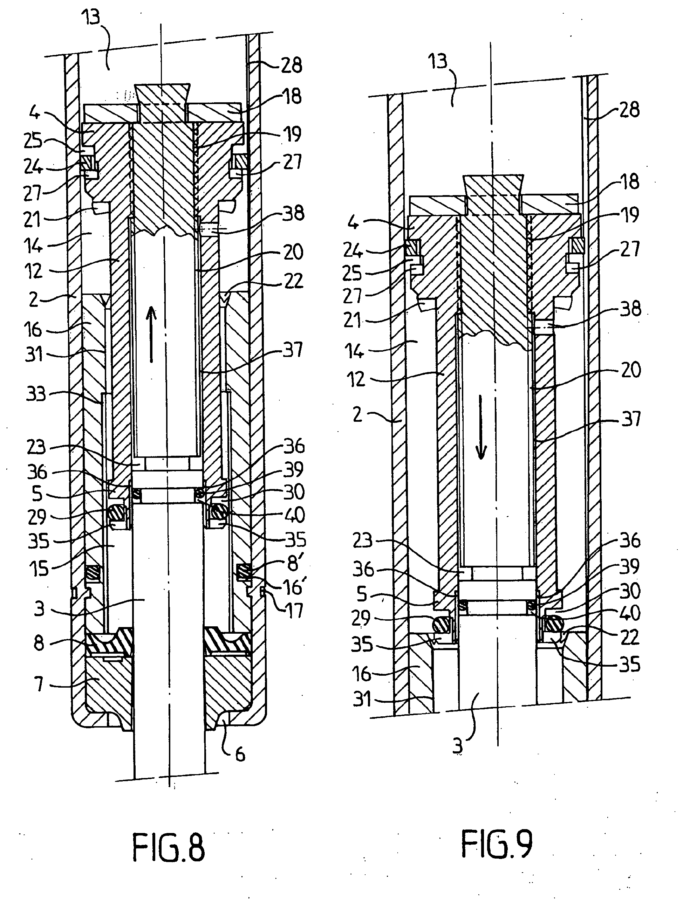

Lors du déplacement de la tige de piston 3 vers sa position rétractée (voir figure 8), la bague 23 est déplacée vers la paroi inférieure de la gorge 25 en libérant le passage par l'interstice entre la bague et le fond de la gorge. Le gaz peut ainsi passer de la première chambre 13 vers la deuxième chambre 14 par les échancrures 27 communiquant avec l'interstice.

Le deuxième piston 5 sert exclusivement à établir un arrêt intermédiaire en créant une étanchéité entre la deuxième chambre 14 et la troisième chambre 15 lors du déplacement de la tige de piston 3 vers la position étendue de celle-ci.

Dans ce but, le deuxième piston 5 porte des deuxièmes moyens d'étanchéité sous forme d'un joint d'étanchéité 29 disposé dans une gorge circulaire 30 prévue sur la périphérie du deuxième piston 5. Ce joint d'étanchéité 29 est apte à coopérer avec une section cylindrique d'étanchéité 31 sur la paroi intérieure de l'entretoise 16 précédée par une section tronconique 32 et succédée par une section cylindrique à plus grand diamètre 33 non étanchable pourvue de rainures longitudinales 34.

Egalement dans ce cas, la hauteur de la gorge 30 est supérieure à la hauteur du joint d'étanchéité 29 afin de créer un jeu permettant à celui-ci de se déplacer axialement dans la gorge.

Plusieurs échancrures 35 sont prévues à l'extrémité inférieure du deuxième piston 5 pour mettre la gorge 30 en communication avec la troisième chambre 15.

Lors du déplacement de la tige de piston 3 vers sa position étendue, le joint d'étanchéité 29 vient d'abord en contact avec la section tronconique 32 par laquelle il est comprimé avant de venir en contact avec la section d'étanchéité 31 dans laquelle la compression est maintenue pour établir une étanchéité entre la troisième chambre 15 et la deuxième chambre 14. Cela a pour effet que le deuxième piston 5 s'arrête en regard de la section d'étanchéité de manière à créer une position d'arrêt intermédiaire.

Afin de continuer le déplacement de la tige de piston 3 vers sa position étendue correspondant à l'ouverture maximale du hayon, il est nécessaire d'exercer une poussée contre celui-ci pour tirer le deuxième piston hors de la section d'étanchéité et dans la section cylindrique 33 non étanchable par le joint d'étanchéité 29 du deuxième piston. Le gaz peut alors circuler librement de la troisième chambre 15 vers la deuxième chambre 14 en passant par les rainures 34 et la tige de piston 3 est poussée vers sa position étendue dans laquelle le premier piston 4 vient en butée contre l'entretoise 16.

Dans cette position, la denture 21 sur le premier piston 4 est en prise avec la denture 22 sur l'extrémité de l'entretoise 16 de manière à permettre le réglage de la longueur étendue du ressort à gaz.

Par ailleurs, la distance entre la position étendue de la tige de piston 3 et la position intermédiaire correspond, dans ce mode de réalisation, à peu près à la longueur de l'élément tubulaire 12 qui relie le premier piston 4 au deuxième piston 5. Cette longueur est indiquée par "L" dans la figure 2. Autrement dit, cette distance est fonction de la longueur de l'élément tubulaire 12.

Selon une caractéristique importante de l'invention, la position d'arrêt intermédiaire peut être désactivée grâce à une dérivation qui relie la troisième chambre 15 à la deuxième chambre 14 et qui peut être obturée pour de nouveau activer la position d'arrêt intermédiaire.

Cette dérivation comporte au moins une rainure longitudinale 36 sur la face intérieure du deuxième piston 5. Cette rainure longitudinale 36 débouche dans la troisième chambre 15 en créant une zone non étanchable pour mettre la troisième chambre en communication avec un passage 37 qui s'étend entre la face intérieure de l'élément tubulaire 12 et la tige de piston 3. Ce passage débouche dans un canal transversal 38 dans l'élément tubulaire 12 qui met le passage 37 en communication avec la deuxième chambre 14.

Le passage 37 est essentiellement formé par le filet 20 sur l'extrémité de la tige de piston 3 qui, dans ce mode de réalisation, coopère avec le taraudage 19 du premier piston 4.

La dérivation entre la troisième chambre 15 et la deuxième chambre 14 peut être obturée pour de nouveau activer la position d'arrêt intermédiaire. Cette obturation est obtenue à l'aide de troisièmes moyens d'étanchéité comportant un joint d'étanchéité 39 disposé dans une gorge circulaire 40 prévue sur la tige de piston 3.

Ainsi, lorsque la longueur étendue du ressort à gaz 1 est maximale, le joint d'étanchéité 39 se trouve en regard des rainures 36 sur la face intérieure de l'élément tubulaire 12 et la dérivation est ouverte. Ceci est la situation qui convient à un seul utilisateur de grande taille qui ne veut pas être gênée par l'arrêt intermédiaire.

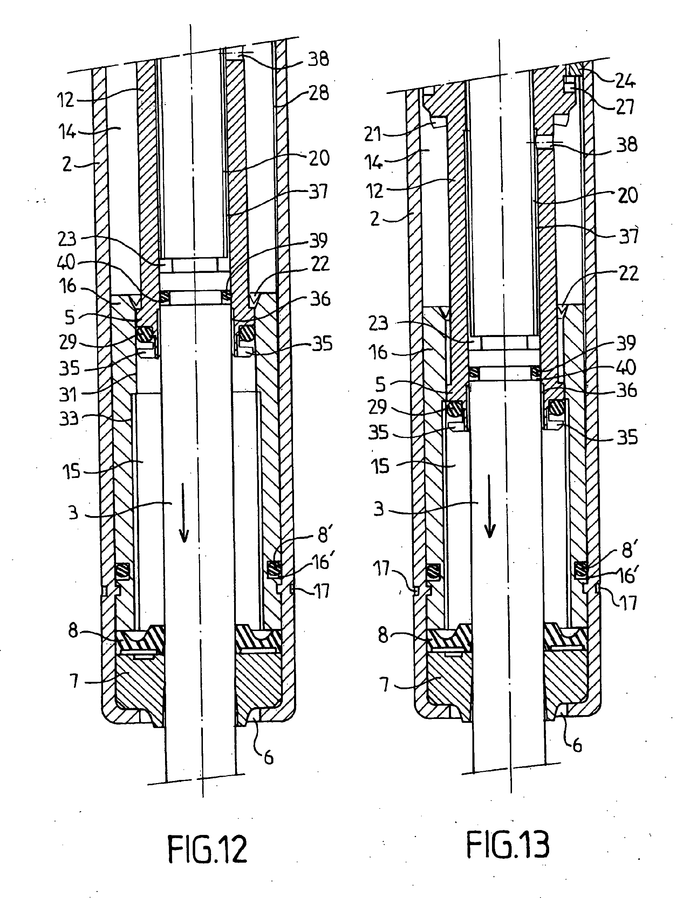

Cependant, si dans d'autres circonstances on souhaite activer de nouveau l'arrêt intermédiaire, il suffit de déplacer légèrement la tige de piston par rapport au deuxième piston 5 à l'aide des moyens d'accouplement 21, 22 et en faisant tourner le cylindre (voir figure 11) pour placer le joint d'étanchéité 39 en retrait par rapport aux rainures 36. Dans cette position, le joint d'étanchéité 39 est comprimé contre la face intérieure de l'élément tubulaire 12 et obture la dérivation.

Le fonctionnement à dérivation désactivée, c'est-à-dire avec arrêt intermédiaire, est illustré aux figures 11 à 13, alors que le fonctionnement à dérivation activée, c'est-à-dire sans arrêt intermédiaire, est illustré aux figures 8 à 10.

La figure 14 illustre la situation avec la dérivation désactivée, alors que la longueur étendue du ressort à gaz est réduite au maximum suite à un déplacement de l'extrémité de la tige de piston 3 vers l'intérieur du cylindre 2. Dans ces circonstances, il peut être souhaitable de pouvoir désactiver la position d'arrêt intermédiaire pour adapter le ressort à gaz à un seul utilisateur de grande ou moyenne taille.

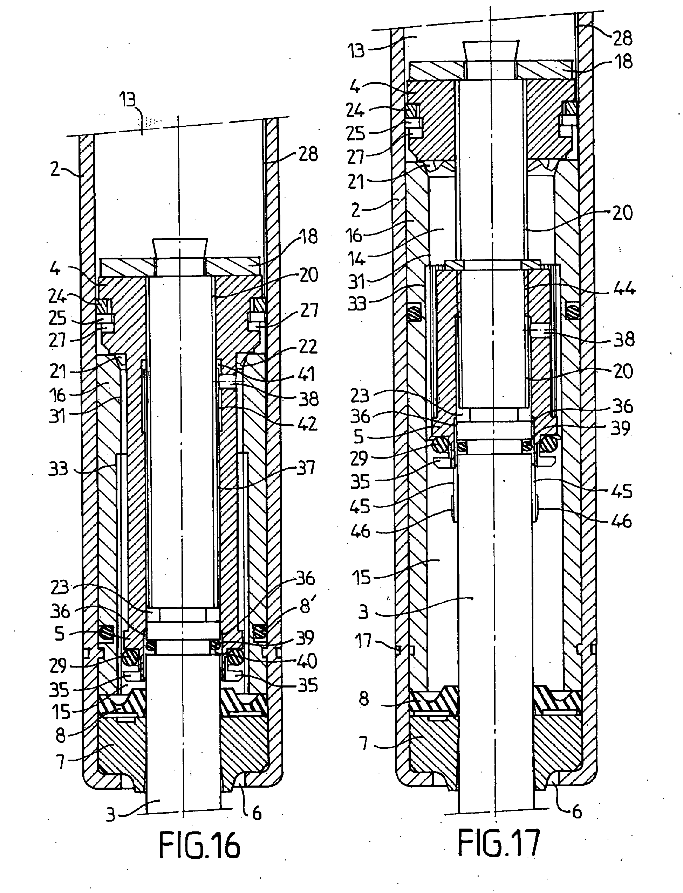

Dans ce cas, il est avantageux de prévoir une dérivation qui comporte sur la face intérieure de l'élément tubulaire 12 un évidement longitudinal 41 (voir figure 16) en communication avec le canal transversal 38 de manière à créer une deuxième zone non étanchable. Cet évidement longitudinal 41 peut comporter une section à plus grand diamètre formant un évidement annulaire autour de la tige de piston 3 et/ou une simple rainure en communication directe avec le canal 38.

Selon une variante illustrée à la figure 15, le ressort à gaz 1 comporte un deuxième arrêt intermédiaire défini par une deuxième section d'étanchéité 43 sur la face intérieure de l'entretoise 16. Cette deuxième section d'étanchéité 43 est disposée entre la première section d'étanchéité 31 et la section cylindrique à plus grand diamètre 33 de l'entretoise.

Grâce au premier mode de réalisation de l'invention qui vient d'être décrit, il est ainsi possible non seulement de régler la longueur étendue du ressort à gaz, mais aussi de modifier l'emplacement de l'arrêt intermédiaire, le désactiver et l'activer.

Les figures 17 à 23 montrent un deuxième mode de réalisation de l'invention avec ses variantes. Ce deuxième mode de réalisation permet, entre autres, de rendre la fonction de modification de l'emplacement de l'arrêt intermédiaire indépendante.

Dans ce but, le deuxième piston 5 et l'élément tubulaire 12 sont séparés du premier piston 4 pour former un ensemble indépendant, ce qui permet de régler la longueur étendue du ressort indépendamment de la modification de l'emplacement de l'arrêt intermédiaire et de la désactivation et l'activation de celui-ci.

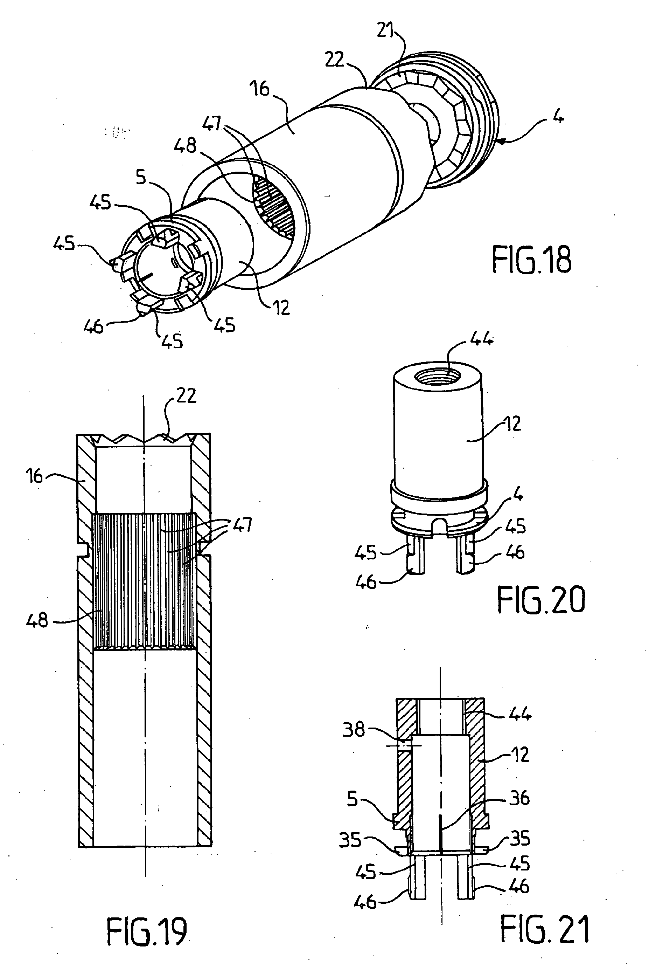

Les éléments essentiels de ce deuxième mode de réalisation sont illustrés aux figures 18 à 21.

Selon ce mode de réalisation, l'élément tubulaire est relié à la tige de piston par une liaison par filetage comprenant sur une partie de la longueur de l'élément tubulaire un taraudage 44 qui coopère avec le filet 20 sur l'extrémité de la tige de piston 3.

L'ensemble deuxième piston - élément tubulaire (5, 12) comporte des organes élastiques qui dans l'exemple illustré sont constitués par des pattes 45 dans le prolongement du deuxième piston 5. Ces pattes 45 sont pourvues d'ergots 46 dirigés radialement vers l'extérieur pour s'accrocher dans des rainures longitudinales 47 d'une section intérieure rainurée 48 de l'entretoise 16.

Ainsi, à partir de la position montrée à la figure 17 dans laquelle les moyens d'accouplement 21, 22 sont en prise l'un avec l'autre pour éventuellement régler la longueur étendue du ressort, il suffit de pousser la tige de piston 3 vers l'intérieur pour désengager les moyens d'accouplement et déplacer en même temps l'ensemble deuxième piston - élément tubulaire (5, 12) pour que les ergots 46 des pattes 45 puissent s'accrocher dans les rainures 47 de l'entretoise 16.

De cette manière, l'ensemble deuxième piston - élément tubulaire (5, 12) se trouve relié en rotation avec l'entretoise, si bien que quand on fait tourner le cylindre 2, l'ensemble deuxième piston - élément tubulaire (5, 12) est grâce à la liaison par filetage déplacé axialement sur l'extrémité de la tige de piston 12 afin de modifier l'emplacement de l'arrêt intermédiaire.

La dérivation décrite ci-dessus en référence au premier mode de réalisation est également présente dans ce deuxième mode de réalisation et permet de désactiver ou d'activer cet arrêt intermédiaire. Du fait de l'indépendance de l'ensemble deuxième piston - élément tubulaire (5, 12), une deuxième zone n'a plus aucune raison d'être puisqu'il est possible de désactiver l'arrêt intermédiaire aussi quand la longueur étendue est réglée pour être minimale.

Il est ainsi possible de modifier l'emplacement de l'arrêt intermédiaire indépendamment du réglage de la longueur étendue du ressort à gaz.

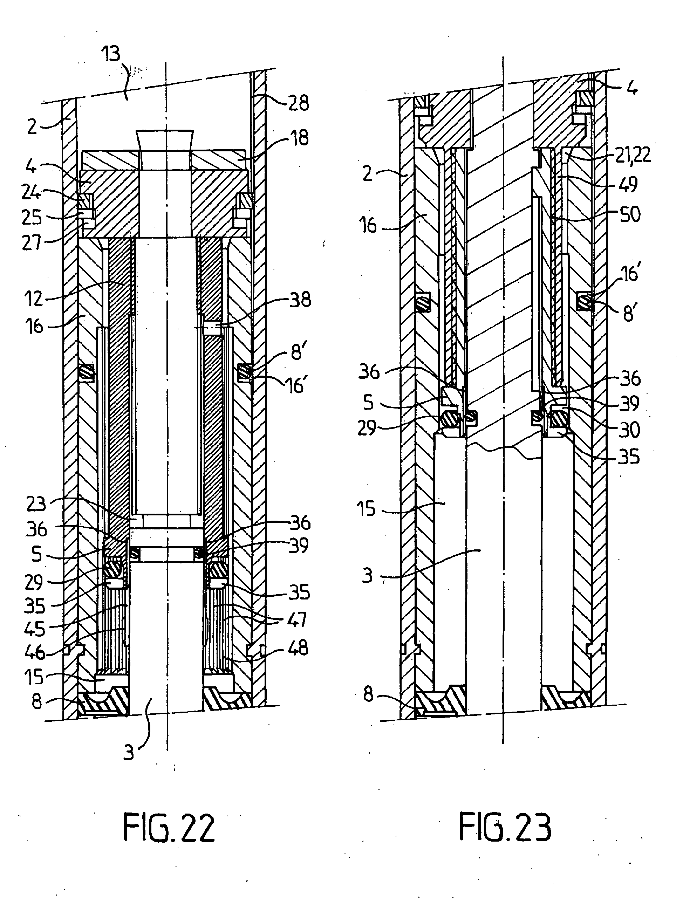

Par ailleurs, il est parfaitement possible de ne pas prévoir le réglage de la longueur étendue du ressort en immobilisant le premier piston 4 lors de la fabrication sur l'extrémité de la tige de piston 3 comme cela est illustré à la figure 22. Dans ce cas, on ne garde que la possibilité de modifier l'emplacement de l'arrêt intermédiaire et de désactiver et d'activer celui-ci.

La figure 23 montre une variante du deuxième mode de réalisation dans laquelle le premier piston 4 est prolongé par un manchon 49 qui reçoit l'élément tubulaire 12 et coopère avec celui-ci par une liaison par filetage 50. Dans ce cas, les moyens d'accouplement 21, 22 sont toujours présentes sur le premier piston 4 et sur l'extrémité de l'entretoise 16 afin de permettre une rotation du premier piston avec son manchon 49 pour déplacer axialement l'ensemble deuxième piston - élément tubulaire (5, 12) de manière à modifier l'emplacement de l'arrêt intermédiaire.

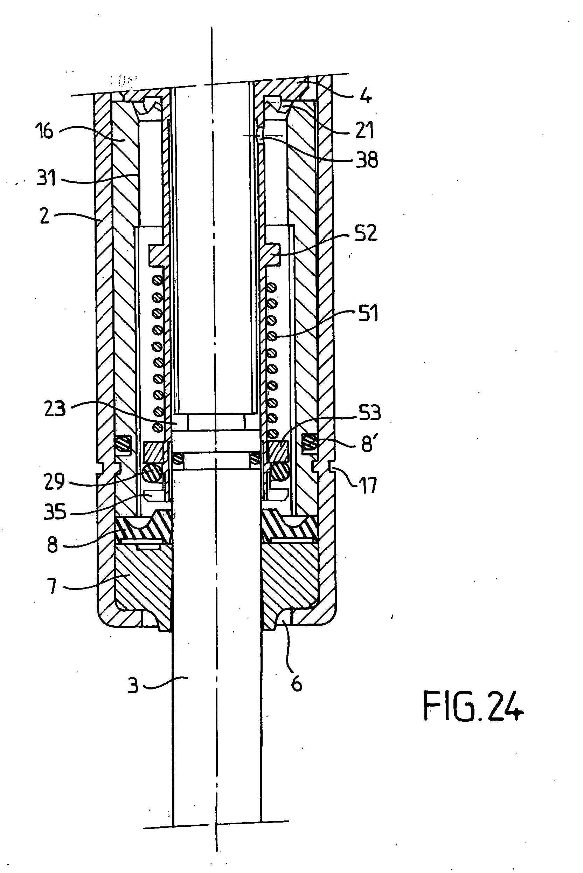

Finalement, la figure 24 montre une variante du premier mode de réalisation dans laquelle un ressort est prévu pour coopérer avec la tige de piston. Dans l'exemple illustré, ce ressort est un ressort hélicoïdal 51 enfilé sur la tige de piston, l'une de ses extrémités prenant appui contre une collerette 52 sur la tige de piston et l'autre extrémité contre une bague coulissante 53 constituant une paroi mobile de la gorge circulaire 5 du deuxième piston 5.

La bague coulissante 53 est maintenue en position pour la réalisation de l'arrêt intermédiaire lorsque le joint d'étanchéité 29 vient en contact avec la section d'étanchéité 31 sur la face intérieure de l'entretoise 16. De cette manière, le ressort définit la force de déclenchement de l'arrêt intermédiaire.

Bien entendu, l'invention n'est pas limitée aux exemples illustrés et décrits et des combinaisons et modifications peuvent être effectuées par l'homme du métier sans pour autant sortir du cadre de l'invention.

## Revendications

1. Ressort à gaz comprimé, comprenant un cylindre (2) contenant un gaz sous pression, ledit cylindre étant fermé à l'une de ses extrémités et présentant à son extrémité opposée une ouverture centrale (6) recevant une tige de piston (3) s'étendant en dehors dudit cylindre (2) en pouvant coulisser entre une position rétractée et une position étendue, ladite tige de piston (3) portant un premier piston (4) et un deuxième piston (5) espacé dudit premier piston par un élément tubulaire (12), lesdits premier et deuxième pistons (4, 5) définissant à l'intérieur du cylindre (2) une première chambre (13), une deuxième chambre (14) et une troisième chambre (15) à volume variable en fonction de la position de ladite tige de piston (3), une entretoise tubulaire (16) solidaire dudit cylindre (2) s'étendant autour de ladite tige de piston (3) de manière à former une butée d'extrémité audit premier piston (4) en définissant la longueur maximale d'extension de ladite tige de piston (3), ledit premier piston (4) portant des premiers moyens d'étanchéité (24) entre lesdites première et deuxième chambres (13, 14) actionnés lors du déplacement de ladite tige de piston (3) de ladite position rétractée vers ladite position étendue, ledit deuxième piston (5) portant des deuxièmes moyens d'étanchéité (29) entre lesdites deuxième et troisième chambres (14, 15) aptes à coopérer avec une section d'étanchéité (31) sur la paroi intérieure de ladite entretoise (16) de manière à définir une position d'arrêt intermédiaire lorsque ladite tige de piston (3) est déplacée de ladite position rétractée vers ladite position étendue, **caractérisé par le fait qu**'une dérivation (36, 20, 38) est prévue entre la tige de piston (3), le deuxième piston et l'élément tubulaire (12) afin de relier ladite troisième chambre (15) à ladite deuxième chambre (14) pour désactiver ladite position d'arrêt intermédiaire, ladite dérivation (36, 20, 38) pouvant être obturée par des troisièmes moyens d'étanchéité (39) pour activer ladite position d'arrêt intermédiaire.

2. Ressort à gaz selon la revendication 1, **caractérisé par le fait que** ladite dérivation (36, 20, 38) comporte au moins une rainure (36) sur la face intérieure dudit deuxième piston (5) débouchant dans ladite troisième chambre (15) en créant une zone non étanchable mettant celle-ci en communication avec un passage (20) s'étendant entre ledit élément tubulaire (12) et la tige de piston (3), et un canal transversal (38) traversant ledit élément tubulaire (12) pour mettre ledit passage (20) en communication avec ladite deuxième chambre (14).

3. Ressort à gaz selon la revendication 2, **caractérisé par le fait que** lesdits troisièmes moyens d'étanchéité (39) sont logés dans une gorge circulaire (40) effectuée sur la tige de piston (3), ledit deuxième piston (5) et ladite tige de piston étant déplaçables axialement l'un par rapport à l'autre afin de placer lesdits troisièmes moyens d'étanchéité (39) en regard de ladite rainure (36) pour ouvrir la dérivation ou en retrait par rapport à ladite rainure (36) pour fermer la dérivation.

4. Ressort à gaz selon la revendication 2 ou 3, **caractérisé par le fait que** ledit passage est essentiellement formé par un filet (20) sur l'extrémité de la tige de piston (3) coopérant avec un taraudage (19; 44) dudit premier piston (4) et/ou dudit élément tubulaire (12).

5. Ressort à gaz selon la revendication 4, **caractérisé par le fait que** ledit premier piston (4) comporte un premier moyen d'accouplement (21) pouvant venir en prise avec un deuxième moyen d'accouplement (22) sur l'extrémité de l'entretoise (16) formant butée lorsque ladite tige de piston (3) est dans sa position d'extension maximale.

6. Ressort à gaz selon la revendication 4 ou 5, **caractérisé par le fait que** ledit taraudage (19) peut venir en butée contre un épaulement (23) sur la tige de piston (3) définissant la pénétration maximale de ladite tige de piston dans ladite première chambre (13) afin de délimiter la réduction maximale de la valeur de ladite position étendue.

7. Ressort à gaz selon l'une quelconque des revendications précédentes, **caractérisé par le fait que** la paroi intérieure de ladite entretoise (16) comporte plusieurs sections d'étanchéité (31, 43) permettant auxdits deuxièmes moyens d'étanchéité (29) de définir plusieurs positions d'arrêt intermédiaire.

8. Ressort à gaz selon l'une quelconque des revendications 2 à 7, **caractérisé par le fait que** ladite dérivation (36, 20, 38) comporte un évidement longitudinal (41) sur la face intérieure dudit élément tubulaire en communication avec ledit canal transversal (38) de manière à créer une deuxième zone non étanchable.

9. Ressort à gaz selon l'une quelconque des revendications 1 à 7, **caractérisé par le fait que** ledit deuxième piston (5) et ledit élément tubulaire (12) forme un ensemble indépendant dudit premier piston (4), ledit ensemble (5, 12) étant pourvu d'organes élastiques (45) aptes à s'accrocher dans des rainures longitudinales (47) d'une section intérieure rainurée (48) de ladite entretoise (16) pour rendre ledit deuxième piston (5) solidaire en rotation avec celle-ci de manière à le déplacer axialement sur la tige de piston (3) à l'aide d'une liaison par filetage (44, 20) entre ledit élément tubulaire (12) et ladite tige de piston (3) sous l'effet d'une rotation relative de ces deux éléments.

10. Ressort à gaz selon la revendication 9, **caractérisé par le fait que** lesdits éléments élastiques sont constitués par des pattes (45) s'étendant dans le prolongement dudit deuxième piston (5) et pourvues d'ergots (46) dirigés radialement vers l'extérieur.

11. Ressort à gaz selon la revendication 9 ou 10, **caractérisé par le fait que** le premier piston (4) est immobilisé sur la tige de piston (3) et que seul le deuxième piston (5) est axialement déplaçable sur celle-ci.

12. Ressort à gaz selon la revendication 11, **caractérisé par le fait que** ledit premier piston (4) est prolongé par un manchon (49) recevant ledit élément tubulaire (12) et coopérant avec celui-ci par une liaison par filetage (50) permettant le déplacement axial dudit deuxième piston (5) par une rotation dudit premier piston (4).

13. Ressort à gaz selon l'une quelconque des revendications 2 à 8, **caractérisé par le fait qu**'un ressort (51) coopère avec la tige de piston (3), l'une de ses extrémités prenant appui contre une collerette (52) sur la tige de piston et l'autre extrémité contre une bague (53) montée coulissante sur ladite tige de piston de manière à constituer une paroi mobile maintenue en position pour la réalisation dudit arrêt intermédiaire lorsque les deuxièmes moyens d'étanchéité (29) viennent en contact avec ladite section d'étanchéité (31) sur la face intérieure de l'entretoise (16).

## Claims

1. Compressed gas spring, comprising a cylinder (2) containing a pressurized gas, the said cylinder being closed at one of its ends and having at its opposite end a central aperture (6) receiving a piston rod (3) extending outside the said cylinder (2) and slidable between a retracted position and an extended position, the said piston rod (3) carrying a first piston (4) and a second piston (5) spaced apart from the said first piston by a tubular element (12), the said first and second pistons (4, 5) delimiting within the cylinder (2) a first chamber (13), a second chamber (14) and a third chamber (15) whose volume varies according to the position of the said piston rod (3), a tubular spacer (16) fixed to the said cylinder (2) extending around the said piston rod (3) so as to form an end stop for the said first piston (4) by defining the maximum extension of the said piston rod (3), the said first piston (4) carrying first sealing means (24) between the said first and second chambers (13, 14) actuated when the said piston rod (3) is moved from the said retracted position towards the said extended position, the said second piston (5) carrying second sealing means (29) between the said second and third chambers (14, 15) for interacting with a sealing section (31) on the inner wall of the said spacer (16) so as to define an intermediate stop position when the said piston rod (3) is moved from the said retracted position towards the said extended position, **characterized in that** a branch (36, 20, 38) is provided between the piston rod (3), the second piston and the tubular element (12) to connect the said third chamber (15) to the said second chamber (14) in order to disable the said intermediate stop position, the said branch (36, 20, 38) being closable by third sealing means (39) to activate the said intermediate stop position.

2. Gas spring according to Claim 1, **characterized in that** the said branch (36, 20, 38) has at least one groove (36) on the inner face of the said second piston (5) opening into the said third chamber (15) to create a non-sealable area putting this chamber into communication with a passage (20) extending between the said tubular element (12) and the piston rod (3), and a transverse channel (38) passing through the said tubular element (12) and putting the said passage (20) into communication with the said second chamber (14).

3. Gas spring according to Claim 2, **characterized in that** the said third sealing means (39) are housed in a circular groove (40) formed in the piston rod (3), the said second piston (5) and the said piston rod being movable axially with respect to each other in order to place the said third sealing means (39) opposite the said groove (36) to open the branch, or in a position retracted from the said groove (36) to close the branch.

4. Gas spring according to Claim 2 or 3, **characterized in that** the said passage is essentially formed by a thread (20) on the end of the piston rod (3) interacting with a tapped portion (19; 44) of the said first piston (4) and/or of the said tubular element (12).

5. Gas spring according to Claim 4, **characterized in that** the said first piston (4) has a first coupling means (21) which can engage with a second coupling means (22) on the end of the spacer (16) forming a stop when the said piston rod (3) is in its position of maximum extension.

6. Gas spring according to Claim 4 or 5, **characterized in that** the said tapped portion (19) can bear against a shoulder (23) on the piston rod (3) defining the maximum penetration of the said piston rod into the said first chamber (13) in order to delimit the maximum reduction of the extension of the said extended position.

7. Gas spring according to any one of the preceding claims, **characterized in that** the inner wall of the said spacer (16) has a plurality of sealing sections (31, 43) enabling the said second sealing means (29) to define a plurality of intermediate stop positions.

8. Gas spring according to any one of Claims 2 to 7, **characterized in that** the said branch (36, 20, 38) has a longitudinal depression (41) on the inner face of the said tubular element in communication with the said transverse channel (38) so as to create a second non-sealable area.

9. Gas spring according to any one of Claims 1 to 7, **characterized in that** the said second piston (5) and the said tubular element (12) form an assembly independent of the said first piston (4), the said assembly (5, 12) being provided with resilient members (45) which can fit into longitudinal grooves (47) of a grooved inner section (48) of the said spacer (16) to fix the said second piston (5) to this spacer with respect to rotation, in such a way that the piston can be moved axially on the piston rod (3) by means of a threaded connection (44, 20) between the said tubular element (12) and the said piston rod (3) as a result of the rotation of these two elements with respect to each other.

10. Gas spring according to Claim 9, **characterized in that** the said resilient elements consist of lugs (45) extending into the extension of the said second piston (5) and provided with pegs (46) directed radially outwards.

11. Gas spring according to Claim 9 or 10, **characterized in that** the first piston (4) is fixed on the piston rod (3), and **in that** only the second piston (5) is axially movable on the piston rod.

12. Gas spring according to Claim 11, **characterized in that** the said first piston (4) is extended by a sleeve (49) receiving the said tubular element (12) and interacting with it by means of a threaded connection (50) enabling the said second piston (5) to be moved axially by a rotation of the said first piston (4).

13. Gas spring according to any one of Claims 2 to 8, **characterized in that** a spring (51) interacts with the piston rod (3), one of its ends bearing against a collar (52) on the piston rod and the other end bearing against a ring (53) mounted slidably on the said piston rod so as to form a movable wall kept in position to create the said intermediate stop when the second sealing means (29) come into contact with the said sealing section (31) on the inner face of the spacer (16).

## Patentansprüche

1. Komprimierte Gasfeder, aufweisend einen Zylinder (2), enthaltend ein Gas, das unter Druck steht, wobei der Zylinder an einem seiner Enden geschlossen ist und an seinem entgegengesetzten Ende eine zentrale Öffnung (6) aufweist, die eine Kolbenstange (3) aufnimmt, welche sich aus dem Zylinder (2) heraus erstreckt und zwischen einer eingefahrenen Stellung und einer ausgefahrenen Stellung gleiten kann, wobei die Kolbenstange (3) einen ersten Kolben (4) und einen zweiten Kolben (5) trägt, welcher von dem ersten Kolben durch ein rohrförmiges Element (12) beabstandet ist, wobei der erste und zweite Kolben (4, 5) im Inneren des Zylinders (2) eine erste Kammer (13), eine zweite Kammer (14) und eine dritte Kammer (15) mit variablem Volumen abhängig von der Stellung der Kolbenstange (3) definieren, wobei ein mit dem Zylinder (2) verbundener rohrförmiger Abstandshalter (16) sich in der Weise um die Kolbenstange (3) erstreckt, daß er ein Endwiderlager für den ersten Kolben (4) bildet, indem er die Länge des maximalen Ausfahrhubs der Kolbenstange (3) definiert, wobei der erste Kolben (4) eine erste Dichtungseinrichtung (24) zwischen der ersten und der zweiten Kammer (13, 14) trägt, die beim Verfahren der Kolbenstange (3) von der eingefahrenen Stellung in die ausgefahrene Stellung in Betrieb gesetzt ist, und der zweite Kolben (5) eine zweite Dichtungseinrichtung (29) zwischen der zweiten und dritten Kammer (14, 15) trägt, die zur Zusammenarbeit mit einem Dichtungsabschnitt (31) an der Innenwand des Abstandshalters (16) derart ausgelegt ist, daß eine Zwischenhaltstellung definiert ist, wenn die Kolbenstange (3) von der eingefahrenen Stellung in die ausgefahrene Stellung gefahren wird, **dadurch gekennzeichnet, daß** eine Ableitung (36, 20, 38) zwischen der Kolbenstange (3), dem zweiten Kolben und dem rohrförmigen Element (12) für eine Verbindung zwischen der dritten Kammer (15) und der zweiten Kammer (14) zum Deaktivieren der Zwischenhaltstellung vorgesehen ist, wobei die Ableitung (36, 20, 38) von einer dritten Dichtungseinrichtung (39) abgedichtet sein kann, um die Zwischenhaltstellung zu aktivieren.

2. Gasfeder nach Anspruch 1, **dadurch gekennzeichnet, daß** die Ableitung (36, 20, 38) wenigstens eine Nut (36) auf der inneren Fläche des zweiten Kolbens (5) beinhaltet, welche unter Bildung einer nicht abdichtbaren Zone in die dritte Kammer (15) mündet und diese in Verbindung mit einem Weg (20), der sich zwischen dem rohrförmigen Element (12) und der Kolbenstange (3) erstreckt, und einem transversalen Kanal (38) bringt, der das rohrförmige Element (12) durchquert, um den Weg (20) in Verbindung mit der zweiten Kammer (14) zu bringen.

3. Gasfeder nach Anspruch 2, **dadurch gekennzeichnet, daß** die dritte Dichtungseinrichtung (39) in einer kreisförmigen Rille (40) untergebracht ist, welche in der Kolbenstange (3) ausgeführt ist, wobei der zweite Kolben (5) und die Kolbenstange relativ zueinander axial verschiebbar sind, bis die dritte Dichtungseinrichtung (39) auf Höhe der Nut (36) ist, um die Ableitung zu öffnen, oder bezüglich der Nut (36) zurückgezogen plaziert ist, um die Ableitung zu schließen.

4. Gasfeder nach Anspruch 2 oder 3, **dadurch gekennzeichnet, daß** der Weg im wesentlichen durch ein Gewinde (20) am Ende der Kolbenstange (3) in Zusammenwirkung mit einem Innengewinde (19; 44) des ersten Kolbens (4) und/oder des rohrförmigen Elements (12) gebildet ist.

5. Gasfeder nach Anspruch 4, **dadurch gekennzeichnet, daß** der erste Kolben (4) eine erste Kopplungseinrichtung (21) beinhaltet, die mit einer zweiten Kopplungseinrichtung (22) auf dem Ende des Abstandhalters (16) in Eingriff kommen kann, wobei ein Widerlager gebildet wird, wenn die Kolbenstange (3) in ihrer Stellung maximalen Ausfahrhubs ist.

6. Gasfeder nach Anspruch 4 oder 5, **dadurch gekennzeichnet, daß** das Innengewinde (19) in Anschlag gegen einen Schulterbereich (3') auf der Kolbenstange (3) kommen kann, wobei die maximale Durchdringung der Kolbenstange in die erste Kammer (13) bis zur Abgrenzung der maximalen Verringerung des Werts der ausgefahrenen Stellung definiert wird.

7. Gasfeder nach einem der vorherigen Ansprüche, **dadurch gekennzeichnet, daß** die Innenwand des Abstandshalters (16) mehrere Dichtungsabschnitte (31, 43) aufweist, die es der zweiten Dichtungseinrichtung (29) erlauben, mehrere Zwischenhaltstellungen zu definieren.

8. Gasfeder nach einem der Ansprüche 2 bis 7, **dadurch gekennzeichnet, daß** die Ableitung (36, 20, 38) eine Längsaussparung (41) auf der Innenfläche des rohrförmigen Elements in Verbindung mit dem transversalen Kanal (38) derart beinhaltet, daß eine zweite nicht abdichtbare Zone gebildet ist.

9. Gasfeder nach einem der Ansprüche 1 bis 7, **dadurch gekennzeichnet, daß** der zweite Kolben (5) und das rohrförmige Element (12) eine Einheit bilden, die unabhängig von dem ersten Kolben (4) ist, wobei die Einheit (5, 12) mit elastischen Organen (45) ausgerüstet ist, die zur Ankopplung in die Längsnuten (47) eines inneren gerillten Abschnitts (48) des Abstandshalters (16) ausgelegt sind, um den zweiten Kolben (5) mit diesem derart einheitlich rotieren zu lassen, daß er axial auf der Kolbenstange (3) mit Hilfe einer Gewindeverbindung (44, 20) zwischen dem rohrförmigen Element (12) und der Kolbenstange (3) unter der Wirkung einer Relativdrehung der beiden Elemente verschiebbar ist.

10. Gasfeder nach Anspruch 9, **dadurch gekennzeichnet, daß** die elastischen Elemente aus Laschen (45) gebildet sind, die sich in die Verlängerung des zweiten Kolbens (5) erstrecken und mit Nasen (46) ausgestattet sind, die radial nach außen gerichtet sind.

11. Gasfeder nach Anspruch 9 oder 10, **dadurch gekennzeichnet, daß** der erste Kolben (4) auf der Kolbenstange (3) unbeweglich ist, und daß nur der zweite Kolben (5) axial auf ihr verschiebbar ist.

12. Gasfeder nach Anspruch 11, **dadurch gekennzeichnet, daß** der erste Kolben (4) durch eine Muffe (49) verlängert ist, die das rohrförmige Element (12) aufnimmt und mit ihm durch eine Gewindeverbindung (50) zusammenwirkt, um die axiale Verschiebung des zweiten Kolbens (5) durch eine Rotation des ersten Kolbens (4) zu erlauben.

13. Gasfeder nach einem der Ansprüche 2 bis 8, **dadurch gekennzeichnet, daß** eine Feder (51) mit der Kolbenstange (3) zusammenarbeitet, wobei sich eines ihrer Enden gegen einen Sattel (52) auf der Kolbenstange abstützt und das andere Ende gegen einen Schiebering (53) abstützt, welcher gleitend auf der Kolbenstange derart angebracht ist, daß er eine bewegliche Wand bildet, die zur Realisierung des Zwischenhalts in Stellung gehalten wird, wenn die zweite Dichtungseinrichtung (29) in Kontakt mit dem Dichtungsabschnitt (31) auf der Innenfläche des Abstandshaltes (16) kommt.
